# EUROPÄISCHE PATENTSCHRIFT

(11) **EP 0 638 793 B1**
(45) Veröffentlichungstag und Bekanntmachung des Hinweises auf die Patenterteilung: **03.06.1998**
(21) Anmeldenummer: 94111273.2
(22) Anmeldetag: 20.07.1994
(51) Int. Cl.: G01M 3/28, G01M 3/32

(54) **Verfahren und Anordnung zur Dichtigkeitsprüfung von Gasrohrleitungen und Gasgeräten**
Procedure and device for leak testing gas pipes and gas appliances
Procédé et dispositif d'essai d'étanchéité de conduites ou appareils à gaz

(30) Priorität: 07.08.1993 DE 4326541; 11.05.1994 DE 4416639
(43) Veröffentlichungstag der Anmeldung: 15.02.1995
(73) Patentinhaber: Pohlmann, Rolf, 58452 Witten (DE)
(72) Erfinder: Pohlmann, Rolf, 58452 Witten (DE)
(74) Vertreter: Patentanwälte Wenzel & Kalkoff

(56) Entgegenhaltungen:
- DE-A- 3 830 356
- DE-A- 4 208 585

## Beschreibung

Die Erfindung betrifft ein Verfahren zur Dichtigkeitsprüfung von Gasrohrleitungen und Gasgeräten durch Messung der innerhalb eines Prüfintervalls anfallenden Gasleckmenge mit Hilfe eines Durchflußmengenmeßgerätes, wobei ein volumenveränderbarer Druckbehälter und die mit diesem in Leitungsverbindung stehende, zu prüfende Gaszufuhrleitung mit einem Prüfgas gefüllt werden, und der Druckbehälter während des Prüfvorganges unter einem vorgegebnen, im wesentlichen konstanten Druck gehalten wird, sowie eine Anordnung zur Durchführung des Verfahrens.

Bei einem bekannten Verfahren zur Prüfung der Dichtigkeit des Rohrleitungskörpers in Gasleitungssystemen wird die Gasuhr eines Hausnetzes durch ein Gasdurchflußmengenmeßgerät ersetzt, das Meßgerät also zwischen die Gasversorgungsleitung und die Zuleitung zu dem zu prüfenden Leitungskörper eingesetzt. Nach Herstellen eines stationären Zustands in dem System wird, während alle Geräte am Leitungskörper abgeschaltet sind, für die Dauer eines vorgegebenen Prüfintervalls die aufgrund von Undichtigkeiten im Leitungskörper pro Zeiteinheit durch das Meßgerät strömende Gasmenge und damit die Gasleckmenge gemessen.

Bei diesem Prüfverfahren, bei dem der Meßverlauf und das Meßergebnis vom Druck in der Versorgungsleitung abhängig sind, werden die Druckschwankungen in der Versorgungsleitung durch Bildung von Summen- und Durchschnittswerten mit Hilfe eines Rechners ausgeglichen, und obwohl über eine zeitlich ausgedehnte Meßperiode gemessen wird, ist die Qualität der Meßergebnisse dennoch unbefriedigend.

Um Dichtigkeitsprüfungen unabhängig von dem aufgrund zahlreicher Einflußfaktoren schwankenden Betriebsdruck und ohne den beschriebenen Rechneraufwand sowie gegebenenfalls auch bei einem höheren Druck als dem derzeit herrschenden Betriebsdruck durchführen können, ist es weiterhin aus DE-A-4208585 bekannt, den zu prüfenden Leitungskörper beispielsweise an der Stelle der Anordnung des Gaszählers oder einer Wohnungsleitung zu unterbrechen und an eine volumenveränderbare Kammer bzw. einen Druckbehälter anzuschließen, die, wie auch der zu prüfende Leitungskörper, mit einem Prüfgas gefüllt werden. Das Prüfgas in der volumenveränderbaren Kammer, die über ein Durchflußmengenmeßgerät mit dem zu prüfenden Leitungskörper verbunden ist, wird mittels eines Druckmediums unter einem einstellbaren, im wesentlichen konstanten, vorgegebenen Prüfdruck gehalten, so daß auf der Grundlage der von dem Durchflußmengenmeßgerät angezeigten Durchflußmenge unabhängig von den äußeren Bedingungen, wie Gasart, Gasdruck, Druckschwankungen und dergleichen, exakte Aussagen hinsichtlich eines gegebenenfalls im Leitungskörper vorhandenen Lecks erzielt werden könnte. Als Prüfgas wird vorzugsweise das von der Gasversorgungsleitung gelieferte Gas verwendet, wobei die als Druckbehälter ausgebildete volumenveränderbare Kammer an der Stelle der Leitungsunterbrechung, beispielsweise im Bereich der Gasuhr, angeordnet ist.

Mit diesem Meßverfahren sind jedoch nur Dichtigkeitsmessungen beispielsweise vom Gaszähler oder Wohnungseingang in Richtung der Verbraucher möglich. Im Rahmen des mit der Umstellung von Stadtgas auf das trockenere Erdgas verbundenen Austrocknens der Hanfdichtungen in den Rohrverbindungen und des bei der Erdgasversorgung herrschenden höheren Betriebsdruckes ist jedoch im Laufe der Zeit in zunehmendem Umfang mit Leckagen an Gaszuführungsleitungen, insbesondere an den Verbindungsstellen mit einer Hanfdichtung zu rechnen, so daß aus Sicherheitsgründen häufigere Dichtigkeitsprüfungen erforderlich sind, für die die bisher bekannten Verfahren durch die erforderlichen Installationsmaßnahmen zu aufwendig sind.

Der Erfindung liegt mithin die Aufgabe zugrunde, die bisher bekannten Verfahren zur Dichtigkeitsprüfung weiter zu vereinfachen, um mit geringem Aufwand aus Sicherheitsgründen regelmäßige Dichtigkeitsuntersuchungen an Gasleitungen und -geräten schnell und problemlos durchführen zu können, und zwar im Sinne einer wirtschaftlichen, regelmäßig wiederkehrenden Überprüfung.

Erfindungsgemäß wird die Aufgabe mit einem Verfahren zur Dichtigkeitsprüfung der eingangs erwähnten Art durch die Verfahrensschritte gemäß dem Kennzeichen von Anspruch 1 gelöst.

Nach einem weiteren Merkmal der Erfindung wird bei geschlossenem Gasgeräteabsperrhahn lediglich die Leckage am Gasgerät, und zwar unabhängig von der Gaszufuhrleitung, anhand der Gasdurchflußmenge gemessen.

In weiterer Ausbildung der Erfindung nach Anspruch 5 ist die vorgeschlagene Meßanordnung zur Durchführung des Verfahrens dadurch gekennzeichnet, daß die Eingangsleitung und die Ausgangsleitung des volumenveränderbaren Druckbehälters an ein Dreiweg-Absperrorgan angeschlossen sind, dessen dritte Anschlußseite mit einem Prüfstutzen im Gasgerät bzw. mit einem entsprechenden Stutzen der Gaszufuhrleitung verbindbar ist.

Weitere Merkmale und zweckmäßige Ausgestaltungen der Erfindung sind in den abhängigen Ansprüchen aufgeführt.

Mit der vorliegenden Erfindung wird ein Verfahren zur Dichtigkeitsprüfung der gesamten Gasanlage im Gebäude angegeben, das mit äußerst geringem Installationsaufwand eine Dichtigkeitsüberprüfung der Gaszufuhrleitung und/ oder des Gasgerätes selbst erlaubt, die bei jeder Wartungs- oder Reparaturarbeit am Gasgerät mit durchgeführt werden kann und damit mit einfachen Mitteln eine kontinuierliche Überprüfung der Dichtigkeit von Gasrohrleitungen und Gasgeräten ermöglicht. Unter Anwendung des mit einem Prüfgas gefüllten, über eine druckbeaufschlagte, hochelastische Membrane volumenveränderbaren Druckbehälters und mit diesem verbundener Druck- und Durchflußmengenanzeigevorrichtungen erfolgt durch den Anschluß an den Prüfstutzen eines Gasgerätes eine Rückwärtsmessung der am entgegengesetzten Ende durch ein Absperrorgan verschlossenen Gasleitung innerhalb eines Prüfintervalls von 1 - 2 Minuten bei konstantem, den Betriebsbedingungen entsprechendem Druck. Dadurch können Leckagen in Gasleitungen und insbesondere undichte Verbindungsstellen, die im Laufe der Zeit insbesondere durch Austrocknen der Hanfdichtungen infolge Umstellung von Stadtgas auf das weitaus trockenere Erdgas entstehen, rechtzeitig festgestellt und entsprechende Maßnahmen zur Gewährleistung der Sicherheit getroffen werden.

Ein Ausführungsbeispiel der Erfindung wird anhand der zugehörigen Zeichnung, in der eine Anordnung zum Rückprüfen von zu Gasgeräten führenden Gasleitungen auf Undichtigkeiten oder zur Leckageermittlung am Gasgerät selbst schematisch dargestellt ist, näher erläutert.

Ein in einer Wohneinheit vorgesehenes Gasgerät 1 ist über eine Geräteleitung 2, eine Gaszufuhrleitung 3 sowie einen Gaszähler 4 mit der Gasversorgungsleitung 5 verbunden. In der Gaszufuhrleitung 3 befindet sich ein dem Gaszähler 4 vorgeschalteter Absperrhahn 6. Ein weiterer Absperrhahn, nämlich der Gasgeräteabsperrhahn 7, ist in die in das Gasgerät integrierte Geräteleitung 2 eingebunden.

Die Dichtigkeitsprüfung des Gasgerätes 1 bzw. der Gaszufuhrleitung 3 erfolgt auf der Basis einer Leckmengenmessung mit einem Meßgerät, das im wesentlichen aus einem durch eine hochelastische Membrane 8 geteilten volumenveränderbaren Druckbehälter 9 sowie einem Durchflußsensor 11 und einem Drucksensor 12 besteht. Die hochelastische Membrane 8 teilt den Druckbehälter 9 in ein über eine Pumpe 10 mit Druckluft beaufschlagtes Druckluftteil 9a und ein mit Gas aus der Gaszufuhrleitung 3 bzw. der Gasversorgungsleitung 5 gefülltes Gasbehälterteil 9b. Das aufgrund der Ausdehnung der druckbeaufschlagten hochelastischen Membrane 8 volumenveränderbare Gasbehälterteil 9b ist mit seiner Ausgangsleitung 14, in der sich der Durchflußsensor 11 und der Drucksensor 12 befinden, sowie mit seiner Eingangsleitung 15 mit einem Dreiweg-Absperrorgan 16 verbunden. Das Dreiweg-Absperrorgan 16 ist schließlich an seiner Eingangsseite an einen Prüfstutzen 13, der sich üblicherweise an der Geräteleitung 2 des Gasgerätes 1 befindet, angeschlossen. Die Pumpe 10 ist außerdem mit einem Druckregler 17 verbunden.

Die im wesentlichen aus dem Druckbehälter 9 mit Pumpe 10 und Druckregler 17 sowie den Durchfluß- und Drucksensoren 11a, 12 bestehende Leckmeßeinrichtung ist vorzugsweise als in sich geschlossene Geräteeinheit mit einer digitalen sowie einer durch farblich unterschiedliche Leuchtdioden gekennzeichneten Durchflußmengenanzeige 11a, einer Druckanzeige 12a sowie Schaltelementen (nicht dargestellt) zum Ein- und Ausschalten des Gerätes und der Pumpe 10, zum Batterietest sowie zur Regulierung der Nullstellung und zur Druckeinstellung für den gewünschten Prüfdruck ausgebildet.

Die Rückprüfung einer von einem Gasgerät 1 ausgehenden Gaszufuhrleitung 3 oder des Gasgerätes selbst wird zunächst in der Weise vorbereitet, daß an den am Gasgerät vorhandenen Prüfstutzen 13 das Dreiweg-Absperrorgan 16 angeschlossen und mit der Eingangsleitung 15 und der Ausgangsleitung 14, d. h. dem Eingang zum Druckbehälter 9 und dem Ausgang des Leckmengenmeßgerätes 11 verbunden wird. Am Anfang des Prüfvorgangs wird eine Nullstellung des angezeigten Drucks am Leckmengenmeßgerät einreguliert.

Das Dreiweg-Absperrorgan 16 ist zunächst in Durchflußrichtung des Pfeils A geöffnet, so daß Gas über die Gaszufuhrleitung 3 und die Eingangsleitung 15 so lange in den Druckbehälter 9 strömen kann, bis dieser, entsprechend seinem Fassungsvermögen von 1,4 1 ebenso wie der Rohrkörper vollständig mit Gas gefüllt sind. Dabei wird gleichzeitig der Druckluftteil 9a des Druckbehälters 9 über die Pumpe 10 und ein nicht dargestelltes Rückschlagventil entlüftet. Für die Dichtigkeitsprüfung der Gaszufuhrleitung 3 und des damit zusammenhängenden Rohrkörpers werden nun der Absperrhahn 6 vor dem Gaszähler 4 oder für die ausschließliche Überprüfung des Gasgerätes 1 der Geräteabsperrhahn 7 geschlossen, und anschließend wird das Dreiweg-Absperrorgan 16 in die Durchflußrichtung gemäß dem Pfeil B umgeschaltet, so daß die Eingangsleitung 15 geschlossen und die Ausgangsleitung 14 geöffnet und der Druckbehälter 9 über das Durchflußmengenmeßgerät bzw. den Durchflußsensor 11 und den Drucksensor 12 mit dem Gasgerät 1 und der Gaszufuhrleitung 3 verbunden ist. Nun kann mit Hilfe der Pumpe 10 über das Druckluftteil 9a und die hochelastische Membrane 8 der Gasdruck im Gasbehälterteil 9b des Druckbehälters 9 auf einen den Betriebsbedingungen entsprechenden Prüfdruck, beispielsweise 19,8 mbar einreguliert werden, um mit der eigentlichen Dichtigkeitsprüfung zu beginnen.

Der Gasdruck wird nun über die Pumpe 10 und den der Pumpe zugeordneten Druckregler 17 konstant auf dem vorgegebenen Prüfdruck gehalten, so daß die Dichtigkeitsprüfung der Gaszufuhrleitung 3 bzw. des Gasgerätes 1 unabhängig von Druckschwankungen im Straßennetz oder im Hausnetz vorgenommen werden kann und eine exakte Feststellung eines Lecks und der Leckgröße entsprechend der Durchflußmengenanzeige unter Betriebsbedingungen möglich ist. Insbesondere ist es mit dem beschriebenen Verfahren möglich, ohne umfangreichen Installationsaufwand eine Rückprüfung des Rohrkörpers, die bei jeder routinemäßigen Wartungsarbeit an einem Gasgerät vorgenommen werden kann, innerhalb kürzester Zeit durchzuführen. Bei einer Prüfdauer von nur 2 Minuten lassen sich Leckmengen in der Größenordnung bis zu 40 1/Std. exakt nachweisen. Somit sind jederzeit und auf einfache Weise regelmäßige Dichtigkeitsprüfungen an Gasrohrleitungen möglich, die ein hohes Maß an Sicherheit in häuslichen Gasversorgungsnetzen gewährleisten.

Durch getrenntes Überprüfen der Rohrleitung 3 mit dem angeschlossenen Rohrkörper sowie einschließlich des Gasgeräts 1 einerseits (Schließen des Absperrhahns 6) und des Gasgeräts 1 allein andererseits (Schließen des Geräteabsperrhahns 7) ist es möglich, durch Bilden des Differenzwertes der beiden erhaltenen Leckmengen einen exakten Wert für den Rohrkörper einschließlich Gaszufuhrleitung 3 allein zu erhalten. Die Messung läuft somit zwar zweimal über das Gasgerät 1, aber man erhält trotzdem den exakten Meßwert für den Rohrkörper - ohne einen Leckmengenanteil, der allein durch das Gasgerät 1 verursacht wird. Das ist wichtig für die Anwendung der Meßwerte auf die Vorschriften.

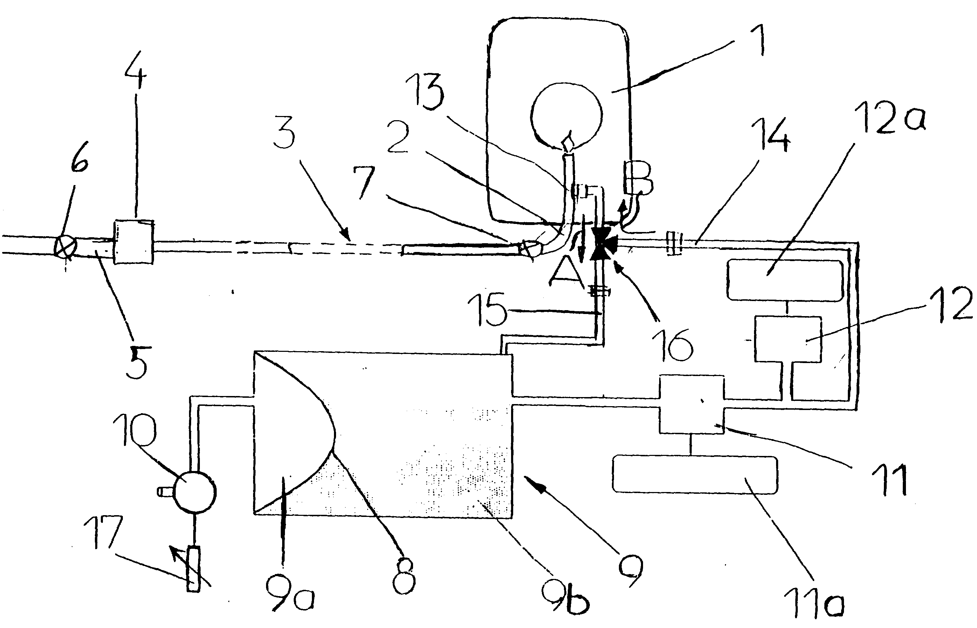

## Patentansprüche

1. Verfahren zur Dichtigkeitsprüfung von Gasrohrleitungen und Gasgeräten durch Messen der innerhalb eines Prüfintervalls anfallenden Gasleckmenge mit Hilfe eines Durchflußmengenmeßgerätes,
wobei ein volumenveränderbarer Druckbehälter und - im Falle einer Gasrohrleitungsprüfung - die mit diesem in Leitungsverbindung stehende, zu prüfende Gaszuführleitung mit einem Prüfgas gefüllt werden und
der Druckbehälter während des Prüfvorgangs unter einem vorgegebenen, im wesentlichen konstanten Druck gehalten wird,
dadurch **gekennzeichnet**, daß
der volumenveränderbare Druckbehälter (9) zum Füllen mit Prüfgas über eine Leitung an ein Gasgerät (1) oder an die zu prüfende Gasrohrleitung oder an einen separaten Prüfgasbehälter angeschlossen,
mit Gas aus der Versorgungsleitung oder mit Prüfgas aus dem Prüfgasbehälter gefüllt und - im Falle der Befüllung aus dem Prüfgasbehälter - anschließend an ein Gasgerät (1) oder an die zu prüfende Rohrleitung angeschlossen wird und
- im Falle der Gasgeräteprüfung - nach dem Absperren des Gasgeräts (1) insbesondere am Geräteabsperrhahn (7) oder
- im Falle der Rohrleitungsprüfung - nach dem Absperren der Rohrleitung insbesondere am Leitungsabsperrhahn (6) eine Leitungsverbindung zwischen dem volumenveränderbaren Druckbehälter (9) und dem Gasgerät (1) oder der Gasrohrleitung über das Durchflußmengenmeßgerät (11) herbeigeführt und
das Prüfgas im volumenveränderbaren Druckbehälter (9) mit einem vorgegebenen Prüfdruck beaufschlagt wird,
der über ein Prüfintervall konstant gehalten wird,
so daß die Leckmengenmessung in Rückwärtsrichtung der Gaszufuhrleitung vorgenommen wird.

2. Verfahren nach Anspruch 1, dadurch **gekennzeichnet**, daß der volumenveränderbare Druckbehälter (9) über eine Eingangsleitung (15) mit dem Prüfgas gefüllt wird, die sich zwischen dem volumenveränderbaren Druckbehälter (9) und dem Gasgerät (1) bzw. der Gaszufuhrleitung (3) befindet.

3. Verfahren nach Anspruch 1 oder 2, dadurch **gekennzeichnet**, daß der Geräteabsperrhahn (7) nach dem Füllen des volumenveränderbaren Druckbehälters (9) geschlossen wird und unabhängig von der Gaszufuhrleitung (3) lediglich die Leckage am Gasgerät (1) anhand der Gasdurchflußmenge gemessen wird.

4. Verfahren nach Anspruch 1, 2 oder 3, dadurch **gekennzeichnet**, daß die Dichtigkeitsprüfung bei einem den jeweiligen Betriebsbedingungen entsprechenden Druck durchgeführt wird.

5. Anordnung zur Durchführung des Verfahrens nach einem der Ansprüche 1 - 4, mit einem volumenveränderbaren Druckbehälter, der durch eine hochelastische Membrane in einen über eine Pumpe druckluftbeaufschlagten Druckluftteil und einen Gasbehälterteil mit einer Eingangsleitung und einer Ausgangsleitung und ein Durchflußmengenmeßgerät eingebunden sind, geteilt ist, dadurch **gekennzeichnet**, daß die Eingangsleitung (15) und die Ausgangsleitung (14) an ein Dreiweg-Absperrorgan (16) angeschlossen sind, dessen dritter Pfad mit einem Prüfstutzen (13) im Gasgerät (1) bzw. mit einem entsprechenden Stutzen der Gaszufuhrleitung verbindbar ist.

6. Anordnung nach Anspruch 5, dadurch **gekennzeichnet**, daß der über eine regelbare Pumpe (10) druckluftbeaufschlagte volumenveränderbare Druckluftbehälter (9), das aus einem Durchflußsensor (11) und einer Durchflußmengenanzeige (lla) gebildete Durchflußmengenmeßgerät und ein aus einem Drucksensor und einer Druckanzeige (12a) bestehendes Druckmeßgerät eine als Geräteeinheit in einem Gehäuse untergebrachte Dichtigkeitsmeßeinrichtung mit Regeleinrichtungen für die Nullstellung des Druckes und die Einstellung eines konstanten Prüfgasdruckes während des Meßvorgangs sowie einem Ein- und Ausgang zum Anschluß an das Dreiweg-Absperrorgan (16) darstellt.

7. Anordnung nach Anspruch 6, dadurch **gekennzeichnet**, daß auch das Dreiweg-Absperrorgan (16) in die Geräteeinheit integriert und mittels einer Verbindungsleitung an den Prüfstutzen (13) des Gasgeräts (1) bzw. an einen entsprechenden Stutzen der Gaszufuhrleitung (3) anschließbar ist.

8. Anordnung nach einem der Ansprüche 5 - 7, **gekennzeichnet** durch eine digitale und eine durch verschiedenfarbige Leuchtdioden stufenweise Anzeige der gemessenen Gasdurchflußmenge.

## Claims

1. Method for the leak testing of gas pipes and gas appliances by measuring the leaked gas quantity occurring within a testing interval with the aid of a flowmeter, in which a variable volume pressure vessel and, in the case of gas pipe testing, the gas supply line to be tested and in line connection therewith, are filled with a test gas and during the testing process the pressure vessel is kept under a preset, substantially constant pressure, characterized in that the variable volume pressure vessel (9), for filling with a test gas, is connected by means of a line to a gas appliance (1) or to the gas pipe to be tested or to a separate test gas container, is filled with gas from the supply line or with test gas from the test gas container and, in the case of filling from the test gas container, is subsequently connected to a gas appliance (1) or to the pipe to be tested and in the case of gas appliance testing, following the turning off of the gas appliance (1), particularly at the appliance stopcock (7) or, in the case of pipe testing, after shutting off the pipe, particularly at the pipe stopcock (6), a line connection is brought about between the variable volume pressure vessel (9) and the gas appliance (1) or the gas pipe by means of the flowmeter (11) and the test gas in the variable volume pressure vessel (9) is subject to the action of a preset testing pressure, which is kept constant over a testing interval, so that the leak quantity is measured in the rearward direction of the gas supply line.

2. Method according to claim 1, characterized in that the variable volume pressure vessel (9) is filled by means of an entry pipe (15) with the test gas, which is located between the variable volume pressure vessel (9) and the gas appliance (1) or gas supply pipe (3).

3. Method according to claim 1 or 2, characterized in that the appliance stopcock (7) is closed after filling the variable volume pressure vessel (9) and independently of the gas supply line (3) only the leak at the gas appliance (1) is measured by means of the gas flow quantity.

4. Method according to claims 1, 2 or 3, characterized in that leak testing takes place at a pressure corresponding to the operating conditions.

5. Means for performing the method according to one of the claims 1 to 4, with a variable volume pressure vessel, which is subdivided by a highly elastic membrane into a compressed air part which can be supplied by means of a pump with compressed air and a gas container part with an entry pipe and an exit pipe and a flowmeter, characterized in that the entry pipe (15) and exit pipe (14) are connected to a three-way shutoff device (16), whose third way is connectable to a test connecting piece (13) in the gas appliance (1) or with a corresponding connecting piece of the gas supply line.

6. Means according to claim 5, characterized in that the variable volume compressed air vessel (9), the flowmeter formed by a flow sensor (11) and a flow quantity display (11a) and a pressure meter comprising a pressure sensor and a pressure display (12a) constitutes a leak measuring device in the form of an appliance unit housed in a casing having regulating devices for the zero setting of the pressure and the adjusting of a constant test gas pressure during the measuring process, as well as an inlet and an outlet for connection to the three-way shutoff device (16).

7. Means according to claim 6, characterized in that the three-way shutoff device (16) is also integrated into the appliance unit and is connectable by means of a connecting line to the test connecting piece (13) of the gas appliance (1) or to a corresponding connecting piece of the gas supply line (3).

8. Means according to one of the claims 5 to 7, characterized by a digital, stepwise display as a result of different coloured light emitting diodes of the measured gas flow quantity.

## Revendications

1. Procédé pour l'essai d'étanchéité de conduites à gaz et d'appareils à gaz par la mesure de la quantité de fuite de gaz produite pendant un intervalle d'essai à l'aide d'un appareil de mesure du débit de passage,
un réservoir sous pression à volume variable et - dans le cas d'un essai de conduite à gaz - la conduite d'amenée du gaz à vérifier étant en raccordement de conduite avec celui-ci étant remplis avec un gaz d'essai et
le réservoir sous pression étant maintenu pendant l'opération d'essai à une pression prédéfinie, substantiellement constante,
caractérisé en ce que
le réservoir sous pression à volume variable (9) est raccordé, pour le remplissage avec du gaz d'essai, par l'intermédiaire d'une conduite à un appareil à gaz (1) ou à la conduite de gaz à vérifier ou à un réservoir de gaz d'essai séparé,
est rempli avec du gaz provenant de la conduite d'alimentation ou avec du gaz d'essai provenant du réservoir de gaz d'essai et - dans le cas du remplissage à partir du réservoir de gaz d'essai - est ensuite raccordé à un appareil à gaz (1) ou à la conduite à vérifier et
- dans le cas de l'essai d'un appareil à gaz - après avoir fermé l'appareil à gaz (1) en particulier au robinet d'arrêt de l'appareil (7) ou
- dans le cas de l'essai d'une conduite - après avoir fermé la conduite en particulier au robinet d'arrêt de la conduite (6),
un raccordement de conduite est réalisé entre le réservoir sous pression à volume variable (9) et l'appareil à gaz (1) ou la conduite de gaz par l'intermédiaire d'un appareil de mesure du débit de passage (11) et
le gaz d'essai dans le réservoir sous pression à volume variable (9) est mis sous pression avec une pression d'essai prédéfinie
qui est maintenue constante pendant un intervalle d'essai,
si bien que la mesure de la quantité de la fuite est effectuée dans le sens inverse de la conduite d'amenée de gaz.

2. Procédé selon la revendication 1, caractérisé en ce que le réservoir sous pression à volume variable (9) est rempli de gaz d'essai par une conduite d'entrée (15) qui se trouve entre le réservoir sous pression à volume variable (9) et l'appareil à gaz (1) ou encore la conduite d'amenée du gaz (3).

3. Procédé selon la revendication 1 ou 2, caractérisé en ce que le robinet d'arrêt de l'appareil (7) est fermé après le remplissage du réservoir sous pression à volume variable (9) et indépendamment de la conduite d'amenée du gaz (3) uniquement la fuite au niveau de l'appareil de gaz (1) est mesurée à l'aide du débit de passage du gaz.

4. Procédé selon la revendication 1, 2 ou 3, caractérisé en ce que l'essai d'étanchéité est réalisé à une pression correspondante aux conditions de service respectives.

5. Dispositif pour exécuter le procédé selon l'une des revendications 1 à 4, avec un réservoir sous pression à volume variable qui est divisé par une membrane extrêmement élastique en une partie à air comprimé mise sous pression avec de l'air comprimé par une pompe et une partie réservoir de gaz avec une conduite d'entrée et une conduite de sortie qui sont intégrées à un appareil de mesure du débit de passage, caractérisé en ce que la conduite d'entrée (15) et la conduite de sortie (14) sont raccordées à un organe d'arrêt à trois voies (16) dont la troisième voie peut être reliée à une tubulure d'essai (13) dans l'appareil à gaz (1) ou à une tubulure correspondante de la conduite d'amenée du gaz.

6. Dispositif selon la revendication 5, caractérisé en ce que le réservoir d'air comprimé (9) à volume variable mis sous pression avec de l'air comprimé par une pompe réglable (10), l'appareil de mesure du débit de passage formé par un détecteur de débit (11) et un affichage du débit (11a) et un appareil de mesure de la pression constitué par un détecteur de pression et un affichage de la pression (12a) constituent un dispositif de mesure de l'étanchéité logé comme bloc d'appareil dans un bâti avec des dispositifs de réglage pour la mise à zéro de la pression et le réglage d'une pression de gaz d'essai constante pendant l'opération de mesurage ainsi qu'avec une entrée et une sortie pour le raccord à l'organe d'arrêt à trois voies (16).

7. Dispositif selon la revendication 6, caractérisé en ce que l'organe d'arrêt à trois voies (16) est aussi intégré au bloc d'appareil et peut être raccordé au moyen d'une conduite de raccord à la tubulure d'essai (13) de l'appareil à gaz (1) ou à une tubulure correspondante de la conduite d'amenée du gaz (3).

8. Dispositif selon l'une des revendications 5 à 7, caractérisé par un affichage numérique et un affichage graduel du débit de passage de gaz mesuré par des diodes lumineuses de différentes couleurs.
